# EUROPEAN PATENT APPLICATION

(11) **EP 3 785 830 A1**
(43) Date of publication of application: **03.03.2021**
(21) Application number: 19194737.3
(22) Date of filing: 30.08.2019
(51) Int. Cl.: B23B 27/04

(54) **CUTTING INSERT FOR PARTING OFF A METAL WORK PIECE**

(71) Applicant: WALTER AG, 72072 Tübingen (DE)
(72) Inventor: BANDURA, Christian, 761 85 Karlsruhe (DE); ZEEB, Rudi, 72070 Tübingen (DE)
(74) Representative: Sandvik

(57) **Abstract**

The present invention relates to a cutting insert (1) for parting off a metal work piece, the cutting insert (1) comprising an elongated body (18), which elongated body (18) has a top surface (4), a bottom surface (5), a first lateral surface (8) and a second lateral surface (9) connecting the top surface (4) and the bottom surface (5) at one lateral side each, a front surface (12) connecting the first and second lateral surfaces (8, 9), the top surface (4) and the bottom surface (5), a longitudinal axis (10) extending axially rearward from the front surface (12) in a central plane, and a cutting head (2) comprising a cutting edge (11), which cutting edge (11) is formed at an intersection between the front surface (12) and the top surface (4), and which cutting edge (11) includes a leading cutting corner (13) at the first lateral side surface (8), and a trailing cutting corner (14) at the second lateral side surface (9), wherein the trailing cutting corner (14) is located axially rearward of the leading cutting corner (13), such that the cutting edge (11) has a rearmost point (16), which rearmost point (16) is located axially rearward from the trailing cutting corner (14).

## Description

### TECHNICAL FIELD

The present disclosure relates to a cutting insert for parting off a metal work piece, the cutting insert comprising an elongated body, which elongated body has a top surface, a bottom surface, a first lateral surface and a second lateral surface connecting the top surface and the bottom surface at one lateral side each, a front surface connecting the first and second lateral surfaces, the top surface and the bottom surface, a longitudinal axis extending axially rearward from the front surface in a central plane, and a cutting head comprising a cutting edge, which cutting edge is formed at an intersection between the front surface and the top surface, and which cutting edge includes a leading cutting corner at the first lateral side surface, and a trailing cutting corner at the second lateral side surface, and wherein the trailing cutting corner is located axially rearward of the leading cutting corner.

### BACKGROUND

A cutting insert for parting off is used for separating for example a machined metal work piece, after the machining of the work piece has been finished, from a blank in form of a rod. Parting off a metal work piece from a metal rod usually is a turning process, wherein the radial infeed of the parting tool including the cutting insert is such that the rod is machined until the initial blank falls apart into two pieces, namely a remaining section of the rod and the actual work piece.

When parting off a metal work piece from a metal rod, it is difficult to obtain a clean cut without burr, for example burr in form of slug or a ring remaining at the work piece. It has been tried to avoid slug formation during parting off by using cutting inserts, wherein a straight cutting edge is tilted with respect to the axis of rotation of the work piece. Therein, the cutting edge, in the radial direction of the rotating work piece, has a leading cutting corner at the work piece side and a trailing cutting corner at the rod side. Since cutting inserts for parting off have a small but finite width, a problem with these known cutting inserts is that the arising transverse forces causes bending of the cutting insert, which again increases the formation of burr and negatively affects the ability to provide a clean cut.

### SUMMARY

It is an object of the present invention to provide a cutting insert for parting off a metal work piece, which cutting insert provides a cleaner cut.

At least one of the above-mentioned objects is achieved by the invention as defined in the claims.

According to a first aspect of the present invention, at least one of the above objects is addressed by a cutting insert for parting off a metal work piece, the cutting insert comprising an elongated body, which elongated body has a top surface, a bottom surface, a first lateral surface and a second lateral surface connecting the top surface and the bottom surface at one lateral side each, a front surface connecting the first and second lateral surfaces, the top surface and the bottom surface, a longitudinal axis extending axially rearward from the front surface in a central plane, and a cutting head comprising a cutting edge, which cutting edge is formed at an intersection between the front surface and the top surface, and which cutting edge includes a leading cutting corner at the first lateral side surface, and a trailing cutting corner at the second lateral side surface, wherein the trailing cutting corner is located axially rearward of the leading cutting corner, and wherein the cutting edge has a rearmost point, which rearmost point is located axially rearward from the trailing cutting corner.

The aim of the inventive cutting insert according to the present invention is to clearly define an axial position of the work piece, at which position the metal work piece is separated from the remaining metal rod while simultaneously reducing resulting off-axis forces acting on the cutting insert. Due to the rearmost point of the cutting edge being located between the leading cutting corner and the trailing cutting corner, the leading cutting corner becomes more pronounced as compared to a straight cutting edge that directly connects the leading and trailing cutting corners. Generally, the off-axis forces acting on the cutting insert are mainly determined by the axial offset between the leading cutting corner and the trailing cutting corner. Thanks to the cutting edge having a rearmost point between the leading and trailing cutting corners, an at least partial compensation of off-axis forces acting on the cutting insert is achieved.

In an embodiment of the present invention, the cutting insert has a width, which width is a transverse distance perpendicular to the longitudinal axis between the leading cutting corner and the trailing cutting corner, and wherein the width is 5 mm or less. Cutting inserts having a width of 5 mm or less are suitable for parting off a metal work piece because little material of the metal rod blank is wasted in the cut. In an embodiment of the present invention, the width of the cutting insert is 3 mm or less or is 1 mm or less.

When the inventive cutting insert is used during a turning process for parting off a work piece, a blank is rotated about an axis of rotation. A radial direction of the work piece is perpendicular to the axis of rotation of the work piece.

When the cutting insert is in operation, i.e. is fed towards and into the rotating metal work piece, the longitudinal axis of the cutting insert can be in line with or parallel to a radial direction of the work piece. In such operations, the longitudinal axis of the cutting insert is perpendicular to the axis of rotation of the work piece. In certain operations, when the cutting insert is in engagement with the work piece, the longitudinal axis of the cutting insert can also coincide with the feed axis of the parting tool.

An axial direction of the cutting insert is to be understood as a direction aligned with or parallel to the longitudinal axis of the cutting insert. During operation of the tool, the axial direction of the cutting insert can be perpendicular to the axis of rotation of the work piece.

A transverse direction of the cutting insert is to be understood as a direction perpendicular to the longitudinal axis of the cutting insert. Thus, a transverse distance or a distance as measured in the transverse direction between two positions on the cutting insert is a distance between the two positions when projected into a plane perpendicular to the longitudinal axis.

In the present application, an off-axis force acting on the cutting insert is a force whose direction differs from the longitudinal axis of the cutting insert. An off-axis force has a component in a direction parallel to the axis of rotation of the work piece. Thus, an off-axis force tends to drive the cutting insert in a direction parallel to the axis of rotation of the work piece.

In an embodiment of the present invention, the cutting insert comprises, in addition to the cutting head, a mounting portion adjoining the rear end of the cutting head. This mounting portion is clamped by a clamping element once the cutting insert is received in an insert seat of a tool body of a parting tool.

In an embodiment of the present invention, the first lateral surface intersects the top surface at a first top lateral edge and the second lateral surface intersects the top surface at a second top lateral edge. Thus, the top surface on each side of the cutting insert is delimited by a top lateral edge.

In an embodiment, wherein the cutting insert comprises a mounting portion, the first and second top lateral edges are parallel in the mounting portion. In this embodiment, the central plane is located midway between the first and second top lateral edges in the mounting portion.

In an embodiment of the present invention, in the mounting portion, the first and second lateral surfaces are symmetric with respect to the longitudinal axis.

In an embodiment of the present invention, the cutting insert for parting off is an indexable cutting insert comprising two cutting heads. In an embodiment, the two cutting heads are located at opposite longitudinal ends of the mounting portion.

In an embodiment of the present invention, the top surface is generally planar at least in the mounting portion, wherein the first and second top lateral edges are provided in a common plane.

In an embodiment of the present invention, in the cutting head, the first and second top lateral edges converge axially rearwards. In this embodiment, as measured in the transverse direction, a distance between the leading cutting corner and the trailing cutting corner is the maximum width of the cutting insert.

In an embodiment of the present invention, as measured in the transverse direction, a distance of the leading cutting corner to the longitudinal axis is larger than a distance of the trailing cutting corner to the longitudinal axis.

The cutting edge extends from the leading cutting corner to the trailing cutting corner and includes both cutting corners.

In an embodiment of the present invention, the cutting edge extends in the plane, which plane forms an angle with the plane of the plane top surface of the mounting portion.

In an embodiment of the present invention, the cutting insert has a width, which width, as measured in the transverse direction, is a distance between the leading cutting corner and the trailing cutting corner, wherein as measured in an axial direction of the cutting insert, a distance between the leading cutting corner and the trailing cutting corner is in a range from 5% to 15% of the width. This design leads to a reduced resulting off-axis force.

In an embodiment of the present invention, a primary section of the cutting edge adjacent to the leading cutting corner comprises a primary angle, wherein the primary angle is an average angle between a line perpendicular to the longitudinal axis and the primary section of the cutting edge, and wherein the primary angle is in a range from 15° to 25° or in a range from 18° to 25° or in a range from 20° to 25°. The line perpendicular to the longitudinal axis intersects the cutting edge at the leading cutting corner. A cutting insert having the primary angle at the leading cutting corner in these ranges, an improved parting off with a reduced residual slug is achieved.

In an embodiment of the present invention, the primary section of the cutting edge extends over 10% of the width of the cutting insert, as measured in the transverse direction.

In an embodiment of the present invention, a secondary section of the cutting edge adjacent to the trailing cutting corner comprises a secondary angle, wherein the secondary angle is an average angle between a line perpendicular to the longitudinal axis and the secondary section of the cutting edge, and wherein the secondary angle is in a range from 5° to 15°. The line intersects the cutting edge at the trailing cutting corner.

In an embodiment of the present invention, the cutting edge has a shape between the leading cutting corner, the rearmost point and the trailing cutting corner such that, when the cutting insert is fed along the longitudinal axis towards the work piece and when the entire cutting edge is in engagement with the work piece, a resulting force acting on the cutting insert forms an angle with the longitudinal axis, which angle is equal to or smaller than 20°. In an embodiment of the present invention the angle is equal to or smaller than 15°, equal to or smaller than 10° or equal to or smaller than 5°. An angle between the resulting force acting on the cutting insert and the longitudinal axis being equal to or smaller than 20°, equal to or smaller than 15°, equal to or smaller than 10°or equal to or smaller than 5° improves the cleanliness of the cut due to a reduction of a residual off-axis forces.

In an embodiment of the present invention, as measured in the transverse direction, the rearmost point is located closer to the longitudinal axis than to the leading cutting corner and to the trailing cutting corner. The rearmost point being closer to the longitudinal axis than to the cutting corners provides a certain depth of the concave cutting edge and thus, in an embodiment, an increased primary angle of the primary section of the cutting edge adjacent to the leading cutting corner.

In an embodiment of the present invention, as measured in the transverse direction, a distance of the rearmost point from the longitudinal axis is 15% or less of the distance between the leading cutting corner and the trailing cutting corner.

In an embodiment of the present invention, as measured in the transverse direction, a distance of the rearmost point from the longitudinal axis is in a range from 0 to 0.2 mm.

In an embodiment of the present invention, the rearmost point is located at the same side of the longitudinal axis as the lading cutting corner. In an alternative embodiment of the present invention the rearmost point is located at the same side of the longitudinal axis as the trailing cutting corner.

In an embodiment of the present invention, the cutting edge comprises a first cutting edge section, which first cutting edge section extends from the leading cutting corner to the rearmost point, and a second cutting edge section, which second cutting edge section extends from the rearmost point to the trailing cutting corner, and wherein the first and second cutting edge sections each have a monotonic shape in a coordinate system, which coordinate system comprises the longitudinal axis as the Y axis. In this embodiment the cutting edge has a smooth shape assisting a compensation of off-axis forces.

In an embodiment of the present invention, the cutting edge comprises a first and a second cutting edge section, wherein the first cutting edge section is located between the leading cutting corner and the rearmost point, has a length of at least two thirds of an entire length of the cutting edge from the leading cutting corner to the rearmost point, and has a radius of curvature of at least 35 mm, or wherein the second cutting edge section is located between the rearmost point and the trailing cutting corner, has a length of at least two thirds of an entire length of the cutting edge from the rearmost point to the trailing cutting corner.

In an embodiment, the first cutting edge section and/or the second cutting edge section of the cutting edge are straight. Cutting edge sections comprising a relatively large radius of curvature of at least 35 mm, in particular straight cutting edges, are easier to manufacture.

In an embodiment of the present invention, the first section and the second section of the cutting edge meet at the rearmost point. Designing the rearmost point as the meeting point between the first straight section and the second straight section of the cutting edge enables to grind the exact shape of the cutting edge of the cutting insert.

According to an embodiment of the present invention, as measured in the transverse direction, the leading cutting corner and the trailing cutting corner have different distances from the longitudinal axis. This design enables to manufacture the cutting insert by grinding a blank, which blank is entirely symmetrical with respect to the longitudinal axis. By positioning the cutting corners at different axial positions, the cutting corners, as measured in the transverse direction, have different distances from the longitudinal axis due to the tapering of the cutting head rearwards from the front surface.

At least one of the leading cutting corner and the trailing cutting corner, in an embodiment of the present invention, is convexly curved having a radius of curvature in a range from 0.05 mm to 0.5 mm. A rounded design of the cutting corner strengthens the cutting corner. In an embodiment, the radius of curvature at at least one of the leading cutting corner and the trailing cutting corner is in a range from 0.05 mm to 0.2 mm

In an embodiment of the present invention, the cutting edge has a concavely curved section, which concavely curved section includes the rearmost point, and which concavely curved section has a radius of curvature in a range from 1 mm to 5 mm. Providing the cutting edge at the rearmost point with a comparatively large radius of curvature reduces crack formation at the rearmost point.

Furthermore, at least one of the above objects is solved by a parting tool for parting off a metal work piece, which parting tool comprises a tool body and the cutting insert according to any one of the previous claims, wherein the tool body has an insert seat, and wherein the cutting insert is mounted in the insert seat.

In an embodiment, the parting tool has a feed axis which feed axis is parallel to the longitudinal axis of the cutting insert. In an embodiment the leading cutting corner and the trailing cutting corner are located in a plane parallel to the axis of rotation when the parting tool is in operation.

### BRIEF DESCRIPTION OF THE FIGURES

Further advantages, features and applications of the present invention will become apparent from the following description of embodiments and the attached figures. The foregoing as well as the following detailed description of embodiments of the present invention will be better understood when read in conjunction with the attached figures. It should be understood that the depicted embodiments are not limited to the precise arrangements and instrumentalities shown. Unless otherwise indicated, like reference numerals in different figures refer to alike or corresponding parts.
Figure 1 is an isometric view from above of a cutting insert according to a first embodiment of the present invention.
Figure 2 is a top view onto the cutting insert of figure 1.
Figure 3 is a side view of the cutting insert of figures 1 and 2.
Figure 4 is an enlarged broken away top view of a cutting head of the cutting insert of figures 1 to 3.
Figure 5 is an enlarged broken away top view of a cutting head of a cutting insert according to a second embodiment of the present invention.
Figure 6 is an enlarged broken away top view of a cutting head of a cutting insert according to a third embodiment of the present invention.
Figure 7 is an enlarged broken away top view of a cutting head according to a fourth embodiment of the present invention.
Figure 8 is an enlarged broken away top view of a cutting head of a cutting insert according to a fifth embodiment of the present invention.
Figure 9 is an enlarged broken away top view of a cutting head of a cutting insert according to a sixth embodiment of the present invention.
Figure 10 is an enlarged broken away top view of a cutting head of a cutting insert according to a seventh embodiment of the present invention.
Figure 11 is an enlarged broken away top view of a cutting head of a cutting insert according to an eighth embodiment of the present invention.

### DETAILED DESCRIPTION

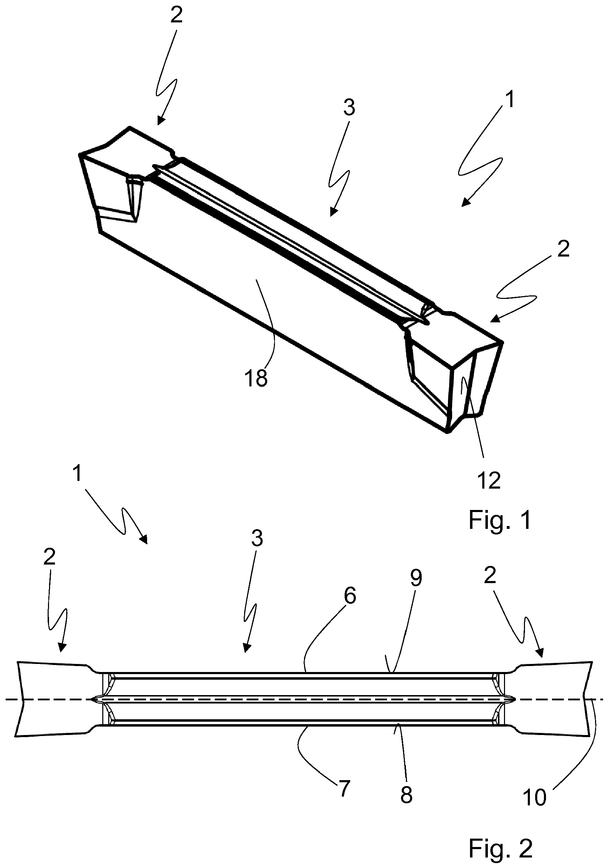

With reference to Figures 1 to 4, a first embodiment of a cutting insert 1 according to the present invention is described.

The cutting insert 1 is an indexable cutting insert having an elongated body 18, wherein two cutting heads 2 are provided at each end of a mounting portion 3. When in use, the mounting portion 3 is clamped in an insert seat of a tool holder. To increase the overall tool life of the cutting insert 1, the two cutting heads 2 are used one after the other. The cutting insert 1 has a top surface 4 and a bottom surface 5. Along the mounting portion 3, the top surface 4 is delimited by two top lateral edges 6, 7. The top lateral edges 6, 7 are each formed at an intersection between a lateral surface 8, 9 and the top surface 4. Along the mounting portion 3, the top lateral edges extend parallel to each other. Furthermore, the lateral surfaces 8, 9 in the mounting portion 3 are parallel to each other. The cutting insert 1 comprises a longitudinal axis 10 which longitudinal axis 10 in the mounting portion 3 is parallel to the two top lateral edges 6, 7 and thus is located in a central plane of the cutting insert 1. When in use, the cutting insert 1 is fed towards a work piece along a direction coinciding the longitudinal axis 10 of the cutting insert 1.

The width w of the cutting insert 1 is a transverse distance measured in a direction perpendicular to the longitudinal axis 10 between the leading cutting corner 13 and the trailing cutting corner 14.

For all embodiments according to Figures 1 to 11, the width w of the cutting insert is 3 mm. The axial distance as measured parallel to the longitudinal axis 10 between the leading cutting corner 13 and the trailing cutting corner 15 in each of the embodiments amounts to 0.3 mm.

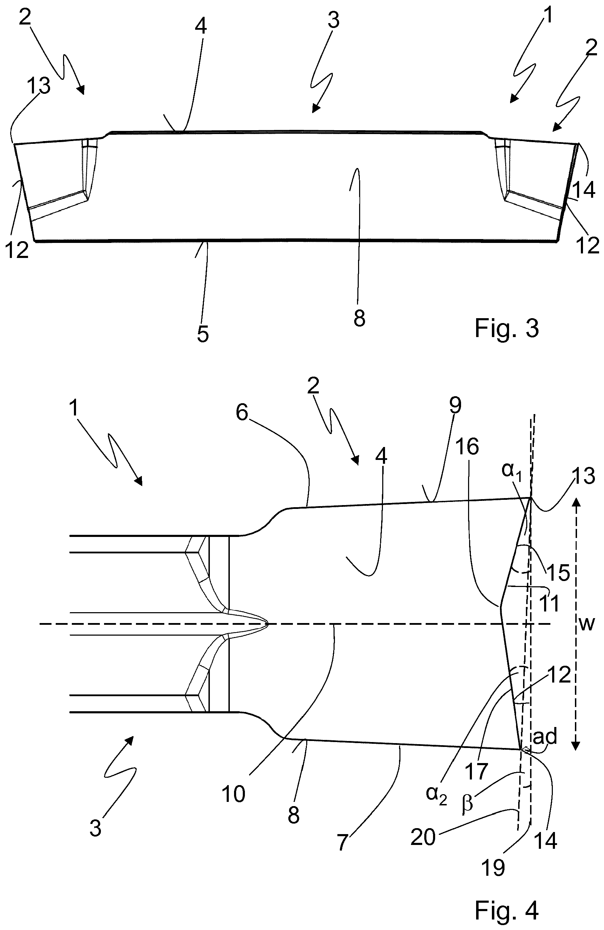

The design of each of the two identical cutting heads 2 is now described in particular with reference to Figure 4.

Each of the two cutting heads 2 comprises a cutting edge 11, which cutting edge 11 is formed at an intersection between a front surface 12 and the top surface 4 of the cutting insert. Furthermore, the cutting edge 11 includes two cutting corners 13, 14. The cutting corners 13, 14 are formed at an intersection between the front surface 12, the top surface 4 as well as one of the lateral surfaces 8, 9 each. The cutting edge 11 is located in a plane spanned by the first and second top lateral edges 6, 7 at the respective cutting head 2.

The top lateral edges 6, 7 and the lateral surfaces 8, 9 at the cutting head 2 taper rearwardly from the cutting edge 11 towards the mounting section 3 Thus, a clearance is provided in the axial direction rearwardly from the two cutting corners 13, 14.

The upper cutting corner 13 of Figure 4 is denoted as the leading cutting corner 13 and the lower cutting corner 14 of Figure 4 is denoted the trailing cutting corner 14. The trailing cutting corner 14 is located axially rearward of the leading cutting corner 13. Expressed in other words, the trailing cutting corner 14 in the axial direction is located closer to the mounting portion 3 than the leading cutting corner 13.

Due to the top lateral edges 6, 7 and the lateral surfaces 8, 9 at the cutting head 2 converging rearwards from the cutting edge 11 towards the mounting section 3, as measured in the transverse direction, the leading cutting corner 13 has a larger distance from the longitudinal axis 10 than the trailing cutting corner 14.

The cutting edge 11 along a first cutting edge section 15 extends axially rearward until the cutting corner 11 reaches a rearmost point 16. Equally, a second cutting edge section 17 extends axially rearward from the trailing cutting corner 14 to the rearmost point 16. Consequently, the rearmost point 16 is located axially rearward of the trailing cutting corner and axially rearward of the leading cutting corner 13.

In the first embodiment of Figures 1 to 4 each of the two cutting edge sections 15, 17 are straight cutting edge sections meeting and intersecting each other at the rearmost point 16. In the first embodiment, the first cutting edge section 15 including the leading cutting corner 13 and a line 19 perpendicular to the longitudinal axis 10 form a primary angle α1 of 15°, wherein the second cutting edge section 17 and the line 19 perpendicular to the longitudinal axis 10 form a secondary angle α2 of 8°.

As the first and second cutting edge sections 15, 17 are straight lines, the first and second cutting edge sections 15, 17 form of the primary section and the secondary section, respectively in the sense of the present application.

A straight line 20 connecting the leading cutting corner 13 and the trailing cutting corner 14 forms an angle β with the line 19 perpendicular to the longitudinal axis 10 of 2°.

In the embodiment of Figures 1 to 4, the rearmost point16 with respect to the longitudinal axis 10 is located at the side towards the leading cutting corner 13. As the slope of the first cutting edge section 15 is steeper than the slope of the second cutting edge section 17, the first cutting edge section 15 is shorter than the second cutting edge section 17.

The cutting edge 11 comprises a leading cutting corner 13, a trailing cutting corner 14 as well as a rearmost point 16. Due to this design the primary angle α1 at the leading cutting corner is much larger than the angle β of a straight line connecting the leading cutting corner 13 and the trailing cutting corner 14. Thus, the cutting insert 1 of Figures 1 to 4 provides a parting off of a work piece which is more precise and causes a reduced slug formation at the work piece when compared to a prior art cutting insert comprising a leading cutting corner and a trailing cutting corner having the same axial offset ad as the insert 1 of Figures 1 to 4, but which leading and trailing cutting corners are part of a straight cutting edge, which straight cutting edge spans from the leading cutting corner to the trailing cutting corner.

Still, the overall off-axis forces acting on the cutting insert 1 when parting off a workpiece are in the order of the off-axis forces acting on the prior cutting insert with a straight cutting edged connecting the leading cutting corner and the trailing cutting corner.

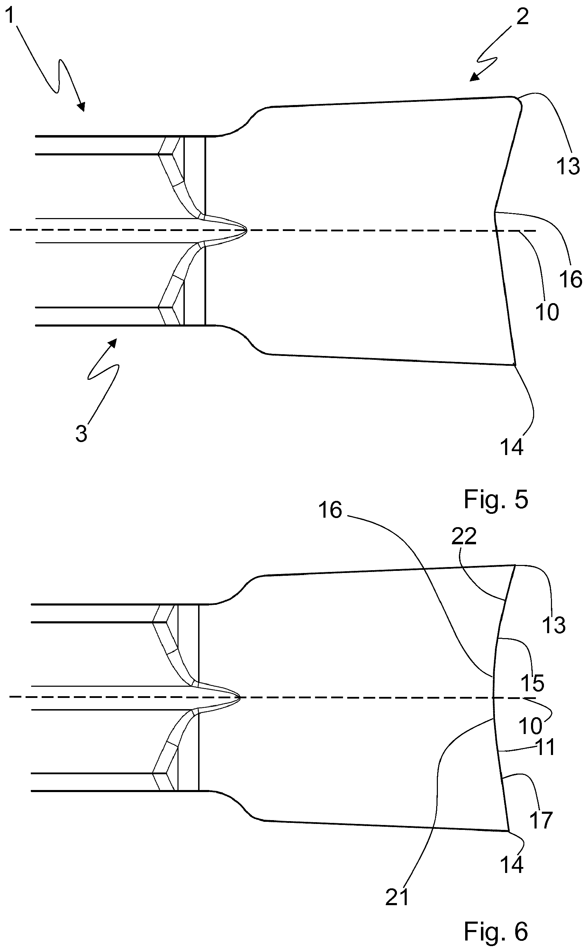

For the further embodiments described below with reference to Figures 5 to 11, only broken away top surfaces of the cutting heads 2 are shown as the cutting heads 2 implement the essential variations between the individual embodiments.

In the second embodiment of Figure 5, the pointed leading cutting corner 13 of the first embodiment according to Figures 1 to 4 has been replaced by a rounded leading cutting corner 13, wherein the leading cutting corner is convexly curved having a radius of curvature of 0.4 mm. This well strengthens the leading cutting corner 13 and thus enhances the service life of the cutting insert 1.

When compared to the first embodiment of Figures 1 to 4, the third embodiment according to Figure 6 has first and second cutting edge sections 15, 17 which are no longer straight lines along their entire extension from the leading cutting corner 13 to the rearmost point16 and from the trailing cutting corner 14 to the rearmost point16, respectively. Instead, the cutting edge 11 has a concavely curved section 21, which concavely curved section includes the rearmost point16 of the cutting edge 11. Consequently, there are no straight first and second cutting edge sections meeting at the rearmost point 16, but the rearmost point 16 is formed by a curved cutting edge section having a considerably large radius of curvature of 3 mm. Consequently, crack formation at the rearmost point 16 the cutting edge 11 is reduced.

In those embodiments, wherein the cutting edge 11 comprises at least a curved section 21 like in the embodiment of Figure 6, the primary angle α1 is the average angle between the primary section 22 of the cutting edge 11, which primary section is adjacent to the leading cutting corner and extends over 10 % of the width of the cutting insert 1.

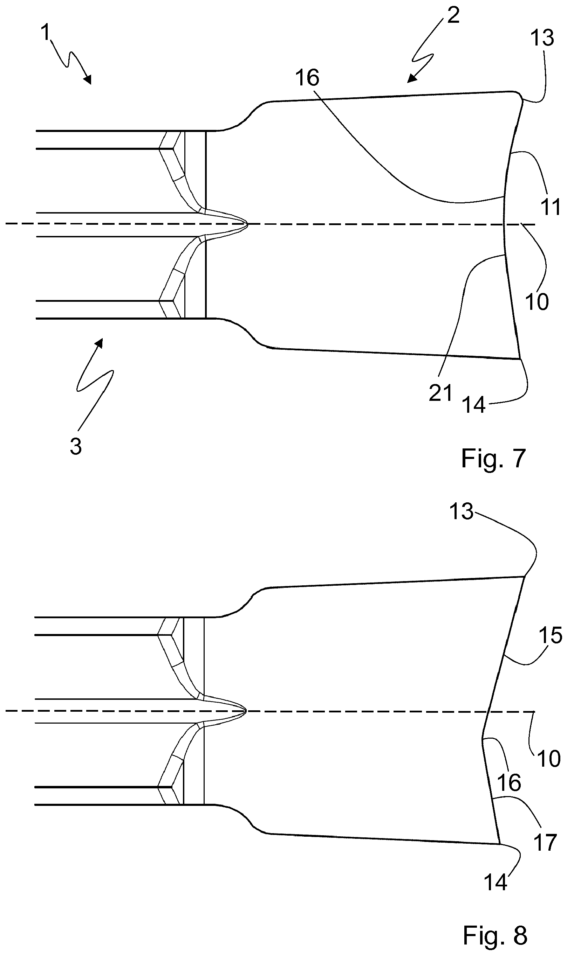

The fourth embodiment of the cutting insert 1 of Figure 7 combines the designs of the cutting inserts according to the first to third embodiments. The cutting head 2 has a leading cutting corner 13 with a radius of curvature of 0.4 mm like the second embodiment of Figure 5 and the cutting edge 11 around the rearmost point 16 comprises a concavely curved section 21 having a radius of curvature of 3 mm like the third embodiment of Figure 6. Due to the overall strengthening of the cutting edge 11, the cutting insert 1 of the fourth embodiment of Figure 7 has an increased tool life.

The embodiments depicted in Figures 8 to 11 differ from those of Figures 1 to 7 in that the rearmost point 16 is no longer located at the side of the longitudinal axis 10 towards the leading cutting corner 13. Instead, the rearmost point16 is shifted towards the side of the longitudinal axis 10 towards the trailing cutting corner 14.

Other than that, the fifth embodiment of Figure 8 well corresponds to the first embodiment of Figures 1 to 4. The first and second cutting edge sections 15, 17 are straight. Consequently, when compared to the first embodiment of Figures 1 to 4, in the fifth embodiment of Figure 8 the first cutting edge section 15 has a slightly smaller primary angle α1 while still maintaining the desired functionality.

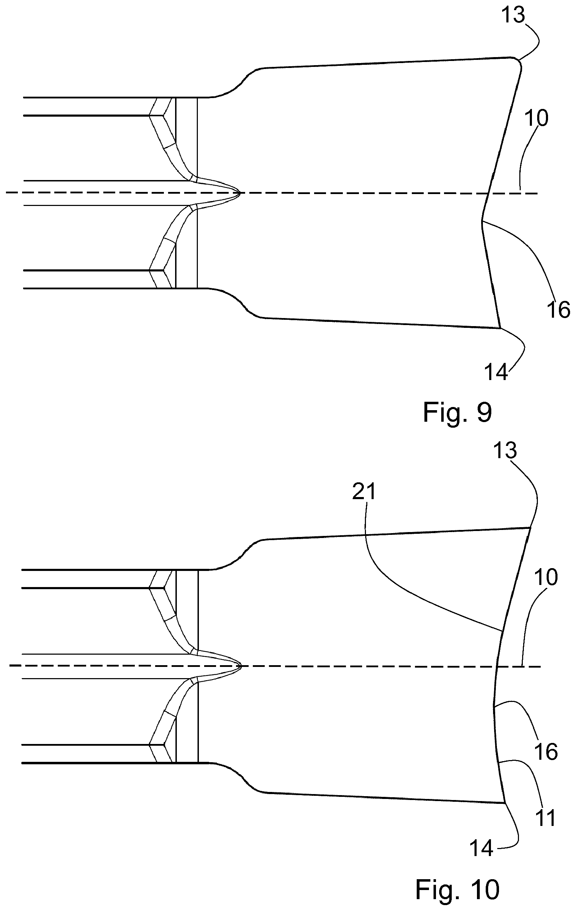

The embodiment of Figure 9 well corresponds to the second embodiment of Figure 5. I.e. the leading cutting corner 13 has an enlarged radius of curvature strengthening the cutting edge 11.

The embodiment of Figure 10 well corresponds to the third embodiment of Figure 6. The cutting edge 11 has a curved section 21 around the rearmost point16 with a radius of curvature of 4 mm strengthening the cutting edge 11.

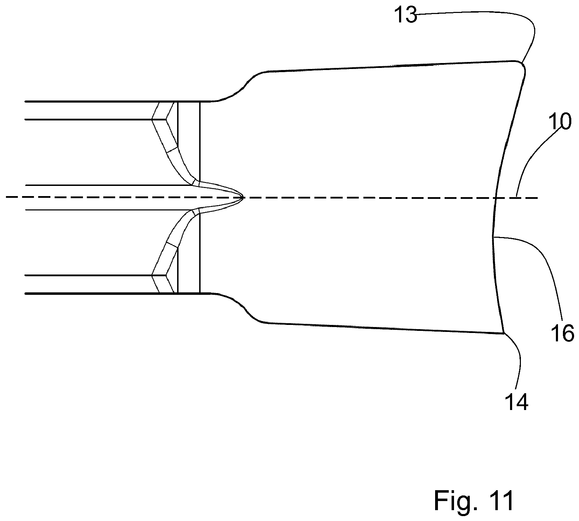

Like the embodiment of Figure 7, the eighth embodiment of Figure 11 combines the designs of the fifth, sixth and seventh embodiments of Figures 8 to 10 and thus except for the position of the rearmost point 16 with respect to the longitudinal axis corresponds to the fourth embodiment of Figure 7.

It is noted that features described in connection with one embodiment also can be used in other embodiments as is readily understandable by a person skilled in the art.

While the invention has been described in detail and with reference to the Figures, this description is only an example and is not considered to restrict the scope of protection as it is defined by the claims.

In the claims the word "comprising" does not exclude other elements or steps and the undefined article "a" does not exclude a plurality. The mere fact that some features have been claimed in different claims does not exclude their combination. Reference numbers in the claims are not considered to restrict the scope of protection.

### Reference numerals

- 1: cutting insert
- 2: cutting head
- 3: mounting portion
- 4: top surface
- 5: bottom surface
- 6, 7: top lateral edge
- 8, 9: lateral surface
- 10: longitudinal axis
- 11: cutting edge
- 12: front surface
- 13: leading cutting corner
- 14: trailing cutting corner
- 15: first cutting edge section
- 16: rearmost point
- 17: second cutting edge section
- 18: body
- 19: line perpendicular to the longitudinal axis 10
- 20: line connecting the leading cutting corner 13 and the trailing cutting corner 14
- 21: concavely curved section of the cutting edge 11
- 22: primary section of the cutting edge 11

- w: width
- ad: axial offset between the leading cutting corner 13 and the trailing cutting corner 14
- α1: primary angle
- α2: secondary angle
- β: angle between line 19 and line 20

## Claims

1. A cutting insert (1) for parting off a metal work piece,
the cutting insert (1) comprising an elongated body (18), which elongated body (18) has
- a top surface (4),
- a bottom surface (5),
- a first lateral surface (8) and a second lateral surface (9) connecting the top surface (4) and the bottom surface (5) at one lateral side each,
- a front surface (12) connecting the first and second lateral surfaces (8, 9), the top surface (4) and the bottom surface (5),
- a longitudinal axis (10) extending axially rearward from the front surface (12) in a central plane, and
- a cutting head (2) comprising a cutting edge (11), which cutting edge (11) is formed at an intersection between the front surface (12) and the top surface (4), and which cutting edge (11) includes
- a leading cutting corner (13) at the first lateral side surface (8), and
- a trailing cutting corner (14) at the second lateral side surface (9),
wherein the trailing cutting corner (14) is located axially rearward of the leading cutting corner (13),
**characterized in that**
the cutting edge (11) has a rearmost point (16), which rearmost point (16) is located axially rearward from the trailing cutting corner (14).

2. The cutting insert (1) according to the previous claim, wherein the cutting insert has a width (w), which width (w), as measured in a transverse direction, is a distance between the leading cutting corner (13) and the trailing cutting corner (14), wherein, as measured in an axial direction, a distance (ad) between the leading cutting corner (13) and the trailing cutting corner (14) is in a range from 5 % to 15 % of the width (w).

3. The cutting insert (1) according to anyone of the previous claims, wherein a primary section (22) of the cutting edge (11) adjacent to the leading cutting corner (13) comprises a primary angle (α1), wherein the primary angle (α1) is an average angle between a line (19) perpendicular to the longitudinal axis (10) and the primary section of the cutting edge (11), and wherein the primary angle (α1) is in a range from 15° to 25°.

4. The cutting insert (1) according to the previous claim, wherein the cutting edge (11) has a shape between the leading cutting corner (13), the rearmost point (16) and the trailing cutting corner (14) such that, when the cutting insert (1) is fed along the longitudinal axis (10) towards the work piece and when the entire cutting edge (11) is in engagement with the work piece, a resulting force forms an angle with the longitudinal axis (10), which angle is equal to or smaller than 20°.

5. The cutting insert (1) according to anyone of the previous claims, wherein, as measured in a transverse direction, the rearmost point (16) is located closer to the longitudinal axis (10) than to the leading cutting corner (13) and to the trailing cutting corner (14).

6. The cutting insert (1) according to anyone of the previous claims, wherein the cutting edge (11) comprises a first cutting edge section (15), which first cutting edge section (15) extends from the leading cutting corner (13) to the rearmost point (16), and a second cutting edge section (17), which second cutting edge section (17) extends from the rearmost point (16) to the trailing cutting corner (14), and wherein the first cutting edge section (15) and the second cutting edge section (17) each have a monotonic shape in a coordinate system, which coordinate system comprises the longitudinal axis (10) as a y-axis.

7. The cutting insert (1) according to anyone of the previous claims, wherein
- the cutting edge (11) comprises a first cutting edge section (15) and a second cutting edge section (17), wherein the first cutting edge section (15)
- is located between the leading cutting corner (13) and the rearmost point (16),
- has a length of at least 2/3 of an entire length of the cutting edge from the leading cutting corner (13) to the rearmost point (16), and
- is straight,
or, wherein the second cutting edge section (17)
- is located between the rearmost point (16) and the trailing cutting corner (14),
- has a length of at least 2/3 of an entire length of the cutting edge (11) from the rearmost point (16) to the trailing cutting corner (14), and
- is straight.

8. The cutting insert (1) according to claim 7, wherein the first section and the second section (15, 17) meet at the rearmost point (16).

9. The cutting insert (1) according to anyone of the previous claims, wherein, as measured in a transverse direction, the leading cutting corner (13) and the trailing cutting corner (14) have different distances from the longitudinal axis (10).

10. The cutting insert (1) according to anyone of the previous claims, wherein at least one of the leading cutting corner (13) and the trailing cutting corner (14) is convexly curved having a radius of curvature in a range from 0.05 mm to 0.5 mm.

11. The cutting insert (1) according to anyone of the previous claims, wherein the cutting edge (11) has a concavely curved section (), which curved section includes the rearmost point (16), and which curved section () has a radius of curvature in a range from 1 mm to 5 mm.

12. The cutting insert according to anyone of the previous claims, wherein the cutting insert (1) has a width (w), which width (w) is a transverse distance perpendicular to the longitudinal axis (10) between the leading cutting corner (13) and the trailing cutting corner (14), and wherein the width is 5 mm or less.

13. A parting tool for parting off a metal work piece, which parting tool comprises a tool body and the cutting insert (1) according to anyone of the previous claims, wherein the tool body has an insert seat, and wherein the cutting insert (1) is mounted in the insert seat.
